**Europäisches Patentamt**

**European Patent Office**

**Office européen des brevets**

(19)

(11) Publication number : **0 494 577 A1**

## (12) EUROPEAN PATENT APPLICATION

(21) Application number : **91500134.1**

(22) Date of filing : **28.11.91**

(51) Int. Cl.$^5$ : **B01J 27/138,** B01J 27/122,
C07C 17/156

(30) Priority : **03.01.91 ES 9100009**

(43) Date of publication of application :
**15.07.92 Bulletin 92/29**

(84) Designated Contracting States :
**BE DE ES FR GB IT NL**

(71) Applicant : **AISCONDEL, S.A.**
**Aragon, 182**
**E-08011 Barcelona (ES)**

(72) Inventor : **Meler Larrosa, Julián**
**Avenida de San Jorge 32**
**E-43201 Reus (Tarragona) (ES)**

(74) Representative : **Curell Sunol, Jorge et al**
**c/o Dr. Ing. M. Curell Sunol I.I. S.L. Passeig de**
**Gràcia 65 bis**
**E-08008 Barcelona (ES)**

(54) **A process for preparing a catalyst.**

(57) The process is based on impregnating a pure gamma alumina by spraying with an aqueous solution containing magnesium chloride and copper chloride, followed by slow drying and a final heat treatment at a temperature not in excess of 180°C.

EP 0 494 577 A1

Jouve, 18, rue Saint-Denis, 75001 PARIS

This invention relates to a process for preparing a catalyst, particularly for the oxychlorination of ethylene, other applications with or without a receiving material being possible, such as, as an example of the latter applications, the preparation of molecular chlorine.

The process of chlorinating gaseous hydrocarbons by way of hydrogen chloride and air or oxygen according to the equation:

$$2HCl + C_2H_4 + \tfrac{1}{2}O_2 \text{ -- } C_2H_4Cl_2 + H_2O$$

is well known and this process is normally carried out, to accelerate the reaction, in the presence of a catalyst formed by salts, preferably halides, of variable valency metals.

These salts have to be used as such in combination with various improved substances and in combination with or disposed on mineral substances such as asbestos, diatomaceous earths, pumice stone, clay, kieselguhr, alumina, silica and the like.

The oxychlorination reaction is conducted by blowing a mixture of ethylene, air or oxygen and hydrogen chloride through a solid catalyst bed in which, under the reaction conditions, a piston type flow is induced, i.e. a pulsing flow which is attained in a fluid bed and which is caused by the size of the bubbles formed along the reactor.

The process of synthesis of dichloroethane by oxychlorination of ethylene requires a catalyst formed by copper chloride to attain an adequate conversion level and selectivity.

To optimize these results in the different dichloroethane synthesis processes, different modifications have been introduced in the manufacture of this catalyst, either by modifying the manufacturing process, or by establishing different formulations.

Currently, the catalysts for this synthesis are based on different formulations of copper chloride alone or in combination with other metal chlorides, normally supported on alumina.

A process, used up to date by the present applicant, is known from U.S. patent 3,461,084, consisting fundamentally of obtaining a catalyst formed by copper chloride supported on a particular type of alumina, specifically α-alumina, with a particle size ranging from 100 to 300 microns, manufactured according to the following steps:

a) heat treatment of alumina at 350°C.

b) mixing, in a fluidised reactor, the alumina with the powdered copper chloride, at a temperature ranging from 300 to 400°C, until the copper is distributed on the alumina.

The catalyst prepared according to the present invention differs from the previous one both in composition and in the manufacturing process.

An object of the invention is a process of the type stated at the beginning wherein a gamma-alumina is impregnated, at a temperature ranging from 0 to 100°C, by spraying with an aqueous solution containing from 0.6 to 1.9 moles/litre of magnesium chloride and from 2.4 to 4.0 moles/litre of copper chloride, followed by slow drying and a final heat treatment at a temperature not in excess of 180°C.

The required volume of said aqueous solution ranges from 0.4 to 0.6 mml per gram of catalyst.

Preferably according to the invention, the catalyst obtained contains from 0.7 to 2.0 wt% of metallic magnesium contained in the magnesium chloride and from 5 to 10 wt% of metallic copper contained in the copper chloride.

According to a further preferred feature of the invention, the gamma alumina is pure and has a surface area ranging from 150 to 250 $m^2/g$, a pore volume in excess of 0.5 ml/g and a mean particle size ranging from 100 to 200 microns.

Also according to the invention, the solution containing the dissolved copper and magnesium salts has a pH ranging from 0 to 1 and a viscosity superior a 5 cps.

According to further preferred features of the invention, the impregnation is effected at a temperature ranging from 0 to 100°C for a period of time ranging from two to three hours. The drying operation is carried out slowly with temperature increments ranging from 5 to 20°C/h and the final heat treatment is carried out for 6 to 12 hours at a temperature ranging from 120 to 180°C.

The present process consists of wet impregnating the gamma alumina with an aqueous solution of a mixture of copper chloride and magnesium chloride in the following steps:

a) fluidisation of the gamma alumina at a temperature ranging from 0 to 100°C.

b) impregnation of the gamma alumina with the metal salts aqueous solution for a period of time ranging from two to three hours and at a temperature ranging from 0 to 100°C.

c) drying of the impregnated gamma alumina at a temperature never in excess of 180°C.

The term fluidisation is used when a sold is obtained in suspension by way of a current of gas.

The catalyst obtained is adapted to an oxychlorination process which is effected in a "slugging" type fluid bed with a dwell time of less than 15 seconds, with hydrogen chloride conversions of over 99% being obtained with Cl/C ratios of less than 0.92.

The catalyst in question provides the following advantages relative to other currently used catalysts:

1. the catalyst of the invention is applicable to a process operating with a residence time of less than 20 seconds, while residence times of from 20 to 40 seconds are normally used.

2. the catalyst of the invention is applicable to a pulsing flow tubular reactor, while a fluidised or fixed bed is normally used.

3. the working rate is 0.2 m/sec. with the catalyst of the invention.

4. the mean particle size of the catalyst of the invention ranges from 100 to 200 microns, while in the remaining processes a size of 50 microns is used.

EXAMPLE

4,000 kg of pure state gamma alumina having a surface area of 200 $m^2/g$, a pore volume of 0.6 ml/g and a mean particle size of 150 microns, were placed in a reactor.

The alumina was held fluidised with an air flow rate of 800 $Nm^3$/hour at a temperature of 50°C.

An aqueous solution of the catalytic species having a composition of 26 wt% copper chloride and 24 wt% magnesium chloride was prepared in a separate vessel. After the salts had dissolved, the alumina was jointly impregnated at a temperature of 96°C. The impregnation was carried out over a period of one hour fifty minutes.

When the impregnation was terminated, it was dried by air at a flowrate of 600 $m^3$/hour and a temperature held below 180°C. This drying step lasted for 8 hours.

The catalyst was finally activated to achieve adequate conversion levels. To this end, it was fluidised with a gas flowrate slightly over 1000 $m^3$/hour at a temperature of 170°C in an acid medium.

**Claims**

1.- A process for the preparation of a catalyst, particularly for oxychlorination of ethylene, wherein a gamma-alumina is impregnated, at a temperature ranging from 0 to 100°C, by spraying with an aqueous solution containing from 0.6 to 1.9 moles/litre of magnesium chloride and from 2.4 to 4.0 moles/litre of copper chloride, followed by slow drying and a final heat treatment at a temperature not in excess of 180°C.

2.- The process of claim 1, wherein the catalyst obtained contains from 0.7 to 2.0 wt% of metallic magnesium contained in the magnesium chloride and from 5 to 10 wt% of metallic copper contained in the copper chloride.

3.- The process of claim 1, wherein the gamma alumina is pure and has a surface area ranging from 150 to 250 $m^2/g$, a pore volume in excess of 0.5 ml/g and a mean particle size ranging from 100 to 200 microns.

4.- The process of claim 2, wherein the solution containing the dissolved copper and magnesium salts has a pH ranging from 0 to 1 and a viscosity superior a 5 cps.

5.- The process of claim 1, wherein the impregnation is effected at a temperature ranging from 0 to 100°C for a period of time ranging from two to three hours.

6.- The process of claim 1, wherein the drying operation is carried out slowly with temperature increments ranging from 5 to 20°C/h.

7.- The process of claim 1, wherein the final heat treatment is carried out for 6 to 12 hours at a temperature ranging from 120 to 180°C.

8.- A catalyst, particularly for oxychlorination of ethylene, produced with the process of claims 1 to 7.

**European Patent Office**

## EUROPEAN SEARCH REPORT

Application Number

EP    91 50 0134

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.5 ) |
| X | EP-A-0 278 922 (ENICHEM SYNTHESIS)<br>* claims 1,5 *<br>* examples 1,2 * | 1,5-8 | B01J27/138<br>B01J27/122<br>C07C17/156 |
| Y | | 2,3 | |
| Y | EP-A-0 058 644 (EUTECO IMPIANTI)<br>* claims 1,2 * | 3 | |
| Y | EP-A-0 119 933 (MONTEPOLYMERI)<br>* claims 1,5 * | 2 | |
| A | EP-A-0 375 202 (IMPERIAL CHEMICAL INDUSTRIES) | | |
| A | EP-A-0 255 156 (SOLVAY) | | |
| A | EP-A-0 176 432 (AUSIMONT) | | |
| A | EP-A-0 057 796 (IMPERIAL CHEMICAL INDUSTRIES) | | |
| | | | TECHNICAL FIELDS SEARCHED (Int. Cl.5 )<br><br>B01J<br>C07C |
| | The present search report has been drawn up for all claims | | |

| Place of search | Date of completion of the search | Examiner |
|---|---|---|
| THE HAGUE | 03 APRIL 1992 | THION M.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................

& : member of the same patent family, corresponding
    document

EPO FORM 1503 03.82 (P0401)